# EUROPEAN PATENT SPECIFICATION

(11) **EP 0 389 655 B1**
(45) Date of publication and mention of the grant of the patent: **10.11.1993**
(21) Application number: 89105600.4
(22) Date of filing: 30.03.1989
(51) Int. Cl.: G06F 9/44, G06F 15/16

(54) **A distributed processing system**
Verteiltes Datenverarbeitungssystem
Système informatique réparti

(43) Date of publication of application: 03.10.1990
(73) Proprietor: Sapaty, Peter S., Guildford Surrey GU2 5XH (GB)
(72) Inventor: Sapaty, Peter S., Guildford Surrey GU2 5XH (GB)

(56) References cited:
- FUTURE GENERATIONS COMPUTER SYSTEMS, vol. 4, 1988, pages 1-14, Elsevier Science Publishers B.V. (North-Holland); S. SAPATY: "WAVE-1: A new ideology of parallel and distributed processing on graphs and networks"
- I.E.E. PROCEEDINGS-E/COMPUTERS & DIGITAL TECHNIQUES, vol. 134, no. 4, part E, July 1987, pages 161-167, Stevenage, Herts, GB; D. MORRIS et al.: "Hierarchical multiprocessor architecture"
- THE 13TH ANNUAL INTERNATIONAL SYMPOSIUM ON COMPUTER ARCHITECTURE, Tokyo, 2th - 5th June 1986, pages 149-156, IEEE, New York, US; N. ITO et al.: "The architecture and preliminary evaluation results of the experimental parallel inference machine PIM-D"
- THE SECOND INTERNATIONAL CONFERENCE ON COMPUTERS AND APPLICATIONS, Peking, 23rd - 27th June 1987, pages 809-816, IEEE, New York, US; G. YI KE et al.: "Design considerations of a distributed parallel reduction architecture"
- SYSTEMS-COMPUTERS-CONTROLS, vol. 14, no. 6, November-December 1983, pages 78-91, Scripta Publishing Co., Silver Spring, Maryland, US; N. TAKAHASHI et al.: "A data flow processor array system for large-scale scientific calculation"
- THE 11TH ANNUAL INTERNATIONAL SYMPOSIUM ON COMPUTER ARCHITECTURE, Ann Arbor, Michigan, 5th - 7th June 1984, pages 290-296, IEEE, New York, US; L. BIC: "Execution of logic programs on a dataflow architecture"

## Description

The invention is related to a distributed processing system comprising a number of similar interpretation modules, each said interpretation module comprising at least one processing unit, memory and a number of channels for communication with other interpretation modules or processors, said distributed processing system being suitable for storing a knowledge base in the form of a data network comprising logical nodes with data items and further comprising relations among said items, where said interpretation modules carry out the function of one or more logical nodes, interpret instructions of programs, strings, in a suited language, carry out instructions of said programs, store intermediate results, exchange messages with other nodes, and transmit non-worked tails of program strings to other nodes addressed by the programs.

A highly distributed processing system for knowledge representation has been disclosed by the inventor in "Parallel processing - State of the Art Report" published by the Pergamon Infotech Ltd., Maidenhead Berkshire, 1987 pages 104 - 119 and in Future Generations Computer Systems, Vol. 4, 1988, pages 1 to 14. There is disclosed a Data Network the nodes of which keeping the pieces of information and being connected to other nodes by arcs which can be oriented or unoriented. Each node is associated with some data item which may correspond either to a name of some concept or to an arbitrary value. Each node may have more than one arc with the same name coming into them or emanating from them. Two nodes may be connected by an arbitrary number of arbitrary-oriented but differently namend arcs. In the Data Network there may be more than one node having the same data item, so, pointing some name or value of the node in the Data Network, some set of nodes may be identified. In the Active Data Network also disclosed in said publication as an extension of the Data Network each node keeps a special activity, enabling it to do local processing on the local data item, storing the intermediate results, exchanging messages with other nodes and handling a number of local control functions necessary for distributed processing in the Active Data Network.

There are different kinds of links between nodes of the Active Data Network, namely "surface links", corresponding to the arcs of the Data Network, "extra links" and "loops". The surface links represent bidirectional channels permitting them to pass messages both along and opposite the orientation of the corresponding arcs. Their names and orientations are pointed together with the addresses of the nodes from which they emanate or to which they lead in both nodes connected by them. Each surface link has its personal order as regards each node it is incident to.

The extra links enable the transfer of messages from each node of the Active Data Network directly to each other one using the special kinds of internode communications, for example a full graph of internode bonds may be supported by the extra links. The transference of messages through both surface and extra links may be either selective or "broadcasting" (to all the nodes these links lead to). The loops are used as some abstraction for the description of virtual propagation of wavefronts in the data space where they physically remain in the same nodes of the Active Data Network. All nodes of the Active Data Network may access a number of common channels, binding it with the external world, which are used concurrently by different nodes. It is also assumed that all nodes of the Active Data Network may work concurrently and asynchronously, exchanging messages with the other ones, without any centralised control device. The special "entry" node is added to the Active Data Network having only extra links with all other nodes of the Active Data Network.

The activity in each node is provided by the same copy of the interpreter of a special language in which all tasks to be solved by the Active Data Network are presented. The main feature of this language is that programs in it operate not over a data structure, as usual, being constantly allocated to one or to a number of processors operating on common or distributed data, but among the active distributed data. They spread through them and dynamically form directly in their space integrated with the data parallel operational structures.

In the Active Data Network the programs begin to spread through it by the node activities using surface and extra links and loops, with their selective or broadcasting modes of operation. This wave propagation may take place concurrently in different directions of the Active Data Network, creating, in general, multiple wavefronts proceeding all over the active data structure.

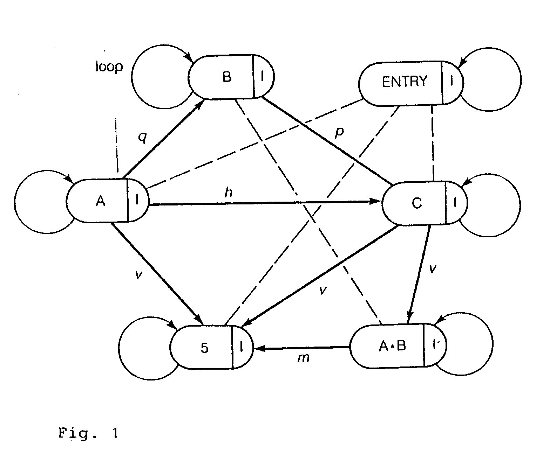

During their propagation the wave formulae with special syntax and semantics may be replicated, split, modified by the node activities, loosing their utilised parts until finally exhausting their possibilities for colonising and transforming the data space. Figure 1 shows in principle a structure of nodes of an Active Data Network, each node having a data item associated with it and its own intelligence I, wherein the nodes are connected to each other by surface links (shown in figure 1 by fat lines), and extra links (shown by dotted lines). Furthermore figure 1 shows the loops described above.

A special WAVE language has been disclosed for solving tasks by the distributed processing system. The WAVE language is able to formulate the tasks in a very dense manner and is highly suited for the distributed processing by distributed intelligencies. The language instructions are spread over the Active Data Network by strings worked by the nodes. Each activated node will work the instructions of the language string addressed to it and will send the non-worked tail of the instruction string to other nodes addressed by the tail.

The proposed distributed processing system avoids traditional serial processing and is, therefore, the strictest parallel processing system avoiding main bottlenecks occuring with former proposals for parallel processing. In the most common parallel processing system, the SIMD system, parallel processing is provided for but the instructions are sent into the parallel processing system serially by a central intelligence. The above mentioned parallel processing system avoids centralized intelligence but works exclusively with the intelligences spread over the data network and being parts of the nodes.

It is the object of the present invention to provide for a hardware solution realizing the above described overall idea in a highly advantageous manner.

According to the present invention as claimed in claim 1 in a distributed processing system the interpretation modules are connected to each other by number of communication channels in a regular mesh, wherein said distributed system further has a number of buses, each said bus being connected to an access processor and all said access processors being connected together in a network, with every interpretation module being connected to a bus via a further one of said communication channels.

In the parallel processing system according to the present invention one node, but for the sake of efficiency preferably a number of nodes with their data items together with the relations among them, represented by the arcs in the model of figure 1, are materialized in interpretation modules which form a network, in which the interpretation modules form groups being each connected to a common bus so that for each group there is a common bus. The common buses are controlled by access processors each of which is correlated to a common bus. The access processors are advantageously connected serially for forming an access ring. The access processors enable the entry into the interpretation network by means of terminals etc. The combination of the interpretation network with an access network, especially an access ring structure, provides the possibility of a highly efficient entry into the interpretation network, which entry can be performed by more than one user simultaneously. The instructions sent by the user will spread over the network structure in the above described manner. If more than one user enter the network simultaneously there can be an overlapping spreading over the network.

The network is preferably a regular mesh with columns and rows, wherein the common buses collect the interpretation modules either of any row or of any column.

In a highly advantageous embodiment of the present invention the interpretation modules form a 3-neighbour mesh. Preferably such a 3-neighbour mesh is performed in a network with common buses connecting all interpretation modules of a row by omitting every second horizontal interconnection of a usual 4-neighbour mesh. The fourth outcomes of the interpretation modules are now free for the connection to the common bus. The 3-neighbour mesh shows the same fine addressability for message routing as a 4-neighbour mesh, where normal processors with four outcomes are used.

The access processors may keep the same local copies of language interpreters as the interpretation modules. The access processors are, in the same way as the interpretation modules, able to process and to distribute the instruction string in a highly efficient manner to the modules concerned.

The interpretation modules could be realized by usual transputers. However, for sophisticated tasks it will be highly advantageous to realize a distributed processing system as mentioned above wherein the interpretation modules (IM) as claimed in claim 5 comprise six processors (CP, WA, DP, LP, TP, MR) communicating with each other either directly or indirectly and which are associated to memories, which processors are:
- a control processor for preparing the language string execution, creating control tracks reflecting the propagation of language string among the distributed network data, and for handling semantics of all control functions of the language,
- a wave analyser for string parsing and syntactical analysis, and for all necessary dynamic transformations of language strings, acting in close cooperation with the control processor,
- a data processor, especially for handling and processing the information contents of nodes as well as front variables and node variables of the language string,
- a link processor for traversing data bonds in the network knowledge base and for sending language strings along them,
- a track processor for working with track forests created by control processor and for sending language string tails along the tracks and merging different types of echo messages and for eliminating unnecessary tracks and activating garbage deletion in the data processor
- a message router establishing the external connections to other interpretation modules or access processors.

The functions of the proposed six-processor interpretation modules as well as the used memories in the interpretation modules and their advantages will be described hereinafter with reference to the enclosed drawing, in which:
- figure 1 -: shows in principle the structure of an Acitve Data Network
- figure 2 -: shows the architecture of a computer implementing the Active Data Network and showing an interpretation network and an access ring
- figure 3 -: shows a block diagram of a six processor interpretation module.

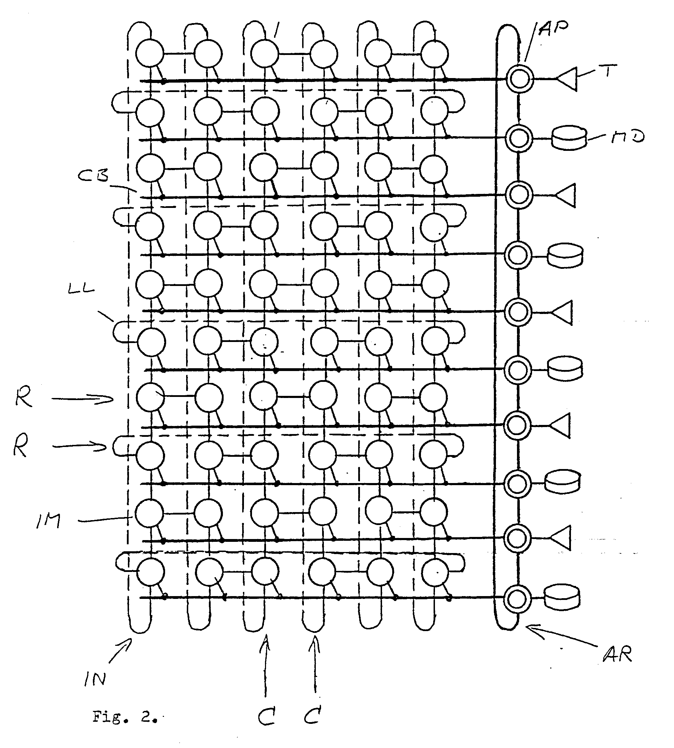

Figure 2 shows an interpretation network IN wherein interpretation modules are arranged in a regular network consisting of columns C and rows R.

The interpretation modules contain the data items of one node, preferably of a number of nodes, together with their relations among them, represented by the arcs in the model of figure 1. For example, the number of nodes and arcs, shown in figure 1, could be implemented in one interpretation module (IM).

The interpretation modules IM each have four outcomes, one of which of each interpretation module IM of a row R is connected to a common bus CB associated to that row R. The other three outcomes of the interpretation modules form a regular 3-neighbour mesh, which is modified from a usual 4-neighbour mesh by omitting any second horizontal interconnection. The fringe interpretation modules in each column C and in each second row R are interconnected to form a torus-like topology.

Each common bus CB is connected to an access processor AP, which also has four outcomes. Two of the outcomes form connection to neighbour access processors AP so that the access processors are serially connected with each other and form an access ring AR. The fourth outcome of each access processor is connected to a terminal T or a memory device MD, such as a magnetic disk.

A user can enter the interpretation network IN through a terminal T and the corresponding access processor AP. The access processor AP interpretes the instruction string in the suited language, such as WAVE language, and distributes the rest of the instruction string either to all or to some dedicated interpretation modules IM. The program is worked within the interpretation network autonomously with a wavefront spreading over the network space.

A multi-user operation is possible, if more than one user enters the interpretation network IN through different terminals T. The different wavefronts can overlap in the interpretation network IN.

Figure 2 shows that the distances along the interpretation modules IM along the rows R are in general longer than along the columns C, so that the overall network is not square but oblong, approximately 2:1 with longer dimension in column C for minimizing the diameter of the network in relation to the number of the interpretation modules IM. The proposed topolgy is simple and can be realized by very large scale integrated (VLSI) technology without problems. The topolgy is especially suited for matching different graph structures often used in knowledge processing.

Through the access ring AR initial activation of the interpretation network IN, collection of results emitted by the interpretation modules IM and the connection to terminals and external memories are performed. The memory devices MD are keeping not resident parts (subnetworks) of the network knowledge base as well as copies of the network knowledge base parts distributed among the interpretation modules.

From a terminal a user may access each interpretation module IM either directly, through the access processor connected to this terminal, or by first sending a message through the access ring AR to the access processor AP connected to the proper common bus CB. The interpretation modules IM may access the memory devices MD also either directly, through the corresponding access processor AP, if it accesses the needed memory device MD, or by a transit to a neighbouring access processor. The access processors AP keep the same local copies of the language interpreter as the interpretation modules IM, and are generally invoked in processing of some parts of the language strings, sending the rest of them to different interpretation modules IM either directly, through the corresponding common bus, or by first propagation through the access ring AR.

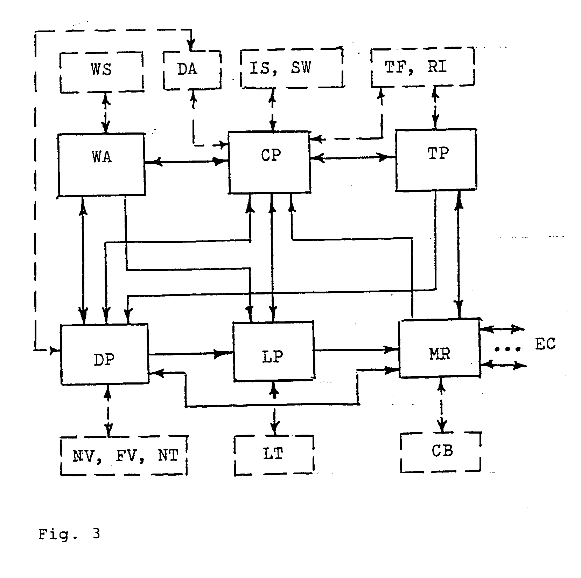

Figure 3 shows a multiprocessor architecture of an interpretation module, where the specialized processors directly communicate with each other in an asynchronous mode using buffering of messages for smoothing differences in rates and loads.

The interpretation module IM consists of six specialized processors: control processor CP, wave analyser WA, track processor TP, data processor DP, link processor LP and message router MR.

Control processor makes initial preparations for the wave language string execution, creates control tracks reflecting the WAVE parsing, execution and propagation among the distributed network data, and handles semantics of all control functions of the language. The control processor CP works in close cooperation with the wave analyser WA, which is dedicated especially for string parsing and syntactical analysis of the WAVE sentences, making all necessary dynamic transformations of the WAVE string (searching for the head, splitting into branches, replicating, deleting brackets etc.) Wave analyzer WA reaching elementary actions or transitions in the heads of formulae during their decomposition sends these operations to data processor DP or link processor LP. Data processor DP handles main operations on integers and strings and also some universal operations on simple lists (vectors), and works with contents of nodes of the network knowledge base as well as with front and node variables of the WAVE language.

Link processor is a device for a fast search of tables and is used for traversing data bonds in the network knowledge base and sending WAVE strings along them. Data processor DP and link processor LP inform control processor CP about success or failure of their operation with resultant checking these situations in tracks. Track processor works directly with the track forests, created by the control processor CP, and specializes in very fast forward/backward track scanning, sending wave tails along the tracks and merging different types of echo messages (according to special logic of merging). It also eliminates unnecessary tracks, activates garbage deletion in data processor (utilized node variables). The track processor TP works in tough cooperation with the control processor CP, informing it of reaching nodes in the track forest under control or receiving orders for fast spreading tails of formulae along the tracks.

The message router MR is used to receive wave formulae from access processors AP or other interpretation modules IM as well as to send them to the neighbouring interpretation modules, if data links of the network knowledge base match nodes in different interpretation modules. It also transmits echo signals passing through the part of the network knowledge base, resident in this interpretation module IM, as well as sends resultant messages to the access ring AR, which messages are obtained from the data processor DP.

The interconnection topology of the interpretation module IM is as follows. The control processor CP is linked by bidirectional channels with wave analyser WA, data processor DP, link processor LP and track processor TP, and in one direction with message router, edged at control processor.

Wave analyser WA has bidirectional links with control processor CP and data processor DP and unidirectional link with link processor LP, edged at link processor LP.

Data processor DP is connected bidirectionally with control processor CP, wave analyser WA, and message router MR and unidirectionally with link processor LP, edged at link processor LP, and track processor TP, edged at data processor DP.

Link processor LP is linked bidirectionally with control processor CP and unidirectionally with data processor DP, edged at link processor LP, wave analyser WA, edged at link processor LP, and message router MR, edged at message router MR.

Track processor TP has bidirectional links with control processor CP and message router MR, and an unidirectional link with data processor DP, edged at data processor DP.

Message router MR has bidirectional links with data processor DP and track processor TP, and unidirectional links with control processor CP, edged at control processor CP, and link processor LP, edged at message router MR. Message router MR has also bidirectional external communications EC with three other interpretation modules IM and one common bus CB, when meshed in an architecture as shown in figure 2.

The processors of the interpretation module IM work with memory modules. Two of them are individual two-port memories, shared by two processors. Others may be internal memories of processors or separated modules.

The memories are in detail:
Suspended wave memory SW is a storage of WAVE formulae and their fragments, waiting to be activated and sent to wave analayser WA. Some of them are accessed by attached identification tokens.

Identification stack IS is a stack keeping identification tokens which are attached by control processor CP to each wave string put into operation through wave analyser WA. The overall number of these tokens controls a number of wave strings under operation, which are spread among processors of the interpretation module IM. The tokens also ease addressability problems when many wave strings are processed concurrently.

Directly accessible nodes memory DA represent a list of node addresses associated with each interpretation module IM which are directly content-addressable from access ring AR. Only through these nodes the initial injection of wave strings into the interpretation network IN is possible, other nodes should be inferenced by traversing the data links. This memory DA is a two port memory and accessible by control processor CP and data processor DP.

Wave stack WS is a stack buffer of wave formulae under processing by wave analyser WA, especially in cooperation with data processor DP.

Node table NT is a table of large volume keeping contents of the network knowledge base nodes and their abstract addresses. Node table NT is connected to data processor DP.

Node variables memory NV represents a storage for spatial variables of the WAVE language which are dynamically attached to the node of the network knowledge base during wave strings propagations and subsequently shared by different wavefronts. These variables live on the network nodes until the latter keep tracks of the wave strings propagations. Node variables memory NV is connected to data processor DP.

Front variables memory FV is a temporal storage occupied by transit front variables of the wave string during its presence within the current interpretation modules IM. Front variables are deleted from the interpretation module IM when the wave string propagates to another interpreatation module IM. The front variables propagate on wavefronts with the string. The front variable memory is accessible by the data processor DP.

Link table LT is a storage for keeping the topolgy of part of the network knowledge base resident in the current interpretation module IM as well as links with the other parts, in other interpretation modules IM. Link table LT keeps node addresses and their links with contents of the links and is addressable by link processor LP.

Track forest memory TF contains a forest-like list structure reflecting tracks which remain in the network knowledge base during wave string propagations, and which are used for further deployment of the wave processors and spatial control of distributed computing. Track forest memory is a two-port memory and shared by control processor CP and track processor TP.

Reentry indicators memory RI is a table keeping addresses of the nodes, passed by wavefronts, together with the levels of their reenterability. When tracks are deleted, these indicators decrease. Null contents of indicators result in activating of garbage deletion by data processor, eliminating node variables attached to these nodes. Reentry indicators memory is used by track processor TP and control processor CP.

Communication buffer CB is associated with the message router MR and buffers message traffic through the current interpretation module. The architecture shown in figure 3 works as a highly asynchronous direct interpreter of the WAVE language and the network knowledge base subnetwork, spatially matching one with the other and also spreading the wave logic to the other interpretation modules IM, if the network knowledge base is distributed among the interpretation modules IM and the wavefronts penetrate beyond the interpretation module borders. The specialized processors of the interpretation module IM may have firmware or direct hardware support of different operations on the described data structures serving for the interpretation process.

## Claims

1. A distributed processing system comprising a number of similar interpretation modules, each said interpretation module comprising at least one processing unit, memory and a number of channels for communication with other interpretation modules or processors,
said distributed processing system being suitable for storing a knowledge base in the form of a data network comprising logical nodes with data items and further comprising relations among said items, where said interpretation modules carry out the function of one or more logical nodes, interpret instructions of programs, strings, in a suited language, carry out instructions of said programs, store intermediate results, exchange messages with other nodes, and transmit non-worked tails of program strings to other nodes addressed by the programs,
and said interpretation modules being connected to each other by a number of said communication channels in a regular mesh,
wherein said distributed system further has a number of buses (CB), each said bus being connected to an access processor (AP) and all said access processors being connected together in a network, with every interpretation module being connected to a bus via a further one of said communication channels.

2. A distributed processing system according to claim one, wherein that each access processor (AP) has output terminals, one of which is taken by the correlated common bus (CB), two of which are connected to neighbour access processor (AP) so as to form an access ring (AR) and another of which is connected to a terminal (T) or an external memory device (MD).

3. A distributed processing system according to claim 1 or 2, wherein each interpretation module (IM) has four output terminals, three of which of all interpretation modules (IM) forming a regular 3-neighbour mesh, and the fourth of which is connected to one of the common buses (CB).

4. A distributed processing system according to one of the claims 1 to 3, wherein the access processors (AP) keep the same local copies of the language interpreter as the interpretation modules (IM).

5. A distributed processing system, comprising a number of similar interpretation modules, each said interpretation module comprising at least one processing unit, memory and a number of channels for communication with other interpretation modules or processors,
said distributed processing system being suitable for storing a knowledge base in the form of a data network comprising logical nodes with data items and further comprising relations among said items, where said interpretation modules carry out the function of one or more logical nodes, interpret instructions of programs, strings, in a suited language, carry out instructions of said programs, store intermediate results, exchange messages with other nodes, and transmit non-worked tails of program strings to other nodes addressed by the programs,
wherein the interpretation modules (IM) comprise six processors (CP, WA, DP, LP, TP, MR) communicating with each other either directly or indirectly and which are associated to memories, which processors are:
- a control processor (CP) for preparing the language string execution, creating control tracks reflecting the propagation of language string among the distributed network data, and for handling semantics of all control functions of the language,
- a wave analyser (WA) for string parsing and syntactical analysis, and for all necessary dynamic transformations of language strings, acting in close cooperation with the control processor (CP),
- a data processor (DP), especially for handling and processing the information contents of nodes as well as front variables and node variables of the language string,
- a link processor (LP) for traversing data bonds in the network knowledge base and for sending language strings along them,
- a track processor (TP) for working with track forests created by control processor and for sending language string tails along the tracks and merging different types of echo messages and for eliminating unnecessary tracks and activating garbage deletion in the data processor (DP)
- a message router (MR) establishing the external connections to other interpretation modules (IM) or access processors (AP).

6. A distributed processing system according to claim 5, wherein each processor works with one or more data memories storing data from the network knowledge base and/or data transmitted and/or induced by the language string.

## Patentansprüche

1. Ein verteiltes Rechensystem, bestehend aus einer Anzahl gleichartiger Interpretationsmoduln, jedes besagte Interpretationsmodul bestehend aus mindestens einer Verarbeitungseinheit, Speicher und einer Anzahl von Kanälen zur Kommunikation mit anderen Interpretationsmoduln oder Prozessoren,
das besagte verteilte Rechensystem ist geeignet zur Speicherung einer Wissensbasis in Form eines Datennetzes, bestehend aus logischen Knoten mit Datenwerten und weiterhin bestehend aus Relationen zwischen besagten Datenwerten, wobei besagte Interpretationsmoduln die Funktion eines oder mehrerer logischer Knoten ausführen, Anweisungen von Programmen, Zeichenketten, in einer geeigneten Sprache interpretieren, Anweisungen der besagten Programme ausführen, Zwischenergebnisse speichern, Nachrichten mit anderen Knoten austauschen und nichtbearbeitete Reste der Programmzeichenketten zu anderen Knoten übertragen, adressiert durch die Programme,
und die besagten Interpretationsmoduln sind miteinander verbunden durch eine Anzahl besagter Kommunikationskanäle in einem regulären Netz,
in dem das besagte verteilte System weiterhin eine Anzahl von Bussen (CB) besitzt, jeder besagte Bus ist verbunden mit einem Zugriffsprozessor (AP) und alle besagten Zugriffsprozessoren sind miteinander verbunden in einem Netz, wobei jedes Interpretationsmodul über einen weiteren der besagten Kommunikationskanäle mit einem Bus verbunden ist.

2. Ein verteiltes Rechensystem gemäß Forderung 1, in welchem jeder Zugriffsprozessor (AP) Ausgabeterminals besitzt, eines wird übernommen durch den korrelierten gemeinsamen Bus (CB), zwei sind verbunden mit benachbarten Zugriffsprozessoren (AP) und bilden so einen Zugriffsring (AR) und ein weiteres ist verbunden mit einem Terminal (T) oder einer externen Speichereinheit (MD).

3. Ein verteiltes Rechensystem gemäß Forderung 1 oder 2, worin jedes Interpretationsmodul (IM) vier Ausgabeterminals besitzt, drei von ihnen, betrachtet über alle Interpretationsmoduln, bilden ein reguläres 3-Nachbar-Netz und das vierte ist verbunden mit einem der gemeinsamen Busse (CB).

4. Ein verteiltes Rechensystem gemäß einer der Forderungen 1 bis 3, worin die Zugriffsprozessoren (AP) dieselben lokalen Kopien des Sprachinterpreters wie die Interpretationsmoduln (IM) besitzen.

5. Ein verteiltes Rechensystem, bestehend aus einer Anzahl gleichartiger Interpretationsmoduln, jedes besagte Interpretationsmodul bestehend aus mindestens einer Verarbeitungseinheit, Speicher und einer Anzahl von Kanälen zur Kommunikation mit anderen Interpretationsmoduln oder Prozessoren,
das besagte verteilte Rechensystem ist geeignet zur Speicherung einer Wissensbasis in Form eines Datennetzes, bestehend aus logischen Knoten mit Datenwerten und weiterhin bestehend aus Relationen zwischen besagten Werten, wobei besagte Interpretationsmoduln die Funktion eines oder mehrerer logischer Knoten ausführen, Anweisungen von Programmen, Zeichenketten, in einer geeigneten Sprache interpretieren, Anweisungen der besagten Programme ausführen, Zwischenergebnisse speichern, Nachrichten mit anderen Knoten austauschen und nichtbearbeitete Reste der Programmzeichenketten zu anderen Knoten übertragen, adressiert durch die Programme,
worin die Interpretationsmoduln (IM) aus sechs Prozessoren (CP, WA, DP, LP, TP, MR) bestehen, welche miteinander entweder direkt oder indirekt kommunizieren und Speichern zugeordnet sind, wobei die Prozessoren sind:
- ein Steuerprozessor (CP) zur Vorbereitung der Ausführung der Sprachzeichenketten, Erzeugung von Kontrollspuren, welche die Propagierung der Sprachzeichenketten über das verteilte Datennetz widerspiegeln und zur Handhabung der Semantik aller Kontrollfunktionen der Sprache,
- ein Waveanalysator (WA) zur Zerlegung und syntaktischen Analyse der Zeichenketten und für alle notwendigen dynamischen Transformationen der Sprachzeichenketten, welcher in enger Kooperation mit dem Steuerprozessor (CP) arbeitet,
- ein Datenprozessor (DP), insbesondere zur Handhabung und Verarbeitung der Informationsinhalte der Knoten als auch von Frontvariablen und Knotenvariablen der Sprachzeichenkette,
- ein Verbindungsprozessor (LP) zum Abarbeiten der Datenbindungen in der Netzwerkwissensbasis und zur Übermittlung von Sprachzeichenketten zwischen ihnen,
- ein Spurprozessor (TP) zur Verarbeitung der von dem Steuerprozessor erzeugten Spurwäldern und zum Senden von Resten der Sprachzeichenketten entlang der Spuren und Verschmelzen verschiedener Typen von Echonachrichten sowie zur Eliminierung nicht notwendiger Spuren und Aktivierung der Speicherbereinigung im Datenprozessor (DP),
- ein Nachrichtenrouter (MR) zur Errichtung der externen Verbindungen zu anderen Interpretationsmoduln (IM) oder Zugriffsprozessoren (AP).

6. Ein verteiltes Rechensystem gemäß Forderung 5, worin jeder Prozessor mit einem oder mehreren Datenspeichern arbeitet, welche Daten von der Netzwerkwissensbasis abspeichern und/oder Daten, übertragen und/oder induziert durch die Sprachzeichenkette.

## Revendications

1. Un système de traitement distribué comprenant un nombre de modules similaires d'interprétation, chacun des dit modules d'interprétation comprenant au moins une unité de traitement, mémoire et un nombre de canaux de communication avec d'autres modules d'interprétation ou calculateurs,
qui dit système de traitement distribué étant approprié pour le stockage d'une base de connaissances sous la forme d'un réseau de données comprenant des noeuds logique avec des articles d'information et comprenant en plus des relations parmi ces dit articles, où il est dit que les modules d'interprétation reportent la fonction d'un ou de plusieurs noeuds logiques, interprètent les ordres des programmes, les chaînes, dans un language approprié, reportent les ordres de ces dit programmes, stockent les résultats intermédiaires, échangent les messages avec d'autres noeuds et transmettent les fins non-préparées des chaînes de programme à d'autres noeuds adressés par le programme,
qui dit modules d'interprétation étant connectés entre eux par un nombre de dit canaux de communication dans une structure régulière,
dans le dit système distribué a en supplément un nombre de circuits (CB), chacun des dit circuits étant connectés à un calculateur d'accès (AP) et tous ces dit calculateurs d'accès étant connectés ensemble dans un réseau, avec chaque module d'interprétation relié à un circuit via à un autre dit canaux de communication.

2. Selon la revendication numéro 1, le système de traitement distribué dans lequel chaque calculateur d'accès (AP) a des terminaux de sortie, l'un d'entre eux étant pris par un circuit commun corrélé (CB), deux d'entre eux étant reliés au calculateur d'accès voisin (AP), de manière à former un anneau d'accès (AR) et un autre étant connecté à un terminal (T) ou à un dispositif de mémoire externe (MD).

3. Selon les revendications 1 ou 2, le système de traitement distribué, dans lequel chaque module d'interprétation (IM) a quatre terminaux de sortie, trois d'entre eux pour chacun des modules d'interprétation (IM) formant une structure régulière à 3-voisins, et le quatrième relié à l'un des circuits communs (CB).

4. Selon l'une des revendications 1 à 3, le système de traitement distribué, dans lequel les calculateurs d'accès (AP) gardent les mêmes copies locales du traducteur de language que les modules d'interprétation (IM).

5. Un système de traitement distribué comprenant un nombre de modules similaires d'interprétation, chacun des dit modules d'interprétation comprenant au moins une unité de traitement, mémoire et un nombre de canaux de communication avec d'autres modules d'interprétation ou calculateurs,
qui dit système de traitement distribué étant approprié pour le stockage d'une base de connaissances sous la forme d'un réseau de données comprenant des noeuds logique avec des articles d'information et comprenant en plus des relations parmi ces dit articles, où il est dit que les modules d'interprétation reportent la fonction d'un ou de plusieurs noeuds logiques, interprètent les ordres des programmes, les chaînes, dans un language approprié, reportent les ordres de ces dit programmes, stockent les résultats intermédiaires, échangent les messages avec d'autres noeuds et transmettent les fins non-préparées des chaînes de programme à d'autres noeuds adressés par le programme,
dans lequel les modules d'interprétation (IM) comprennent six calculateurs (CP, WA, DP, LP, TP, MR) communiquant entre eux soit directement ou indirectement et lesquels sont associés à des mémoires, lesquels calculateurs sont :
- un calculateur de contrôle (CP) pour préparer l'exécution de la chaîne de language, pour créer des voies de contrôle reflétant la propagation de la chaîne de language parmi le réseau distribué de données et pour traiter les sémantiques pour toutes les fonctions de contrôle du language,
- un analyseur d'ondes (WA) pour l'analyse de la chaîne et analyse syntaxique, et pour toutes transformations dynamiques nécessaires des chaînes de language, agissant en coopération serrée avec le calculateur de contrôle,
- un calculateur de données (DP), spécialement pour s'occuper et traiter les contenus d'information des noeuds ainsi que les variables antérieures et variables des noeuds de la chaîne de language,
- un calculateur de liaison (LP) pour le passage des liens de données dans la base du réseau de connaissances et pour l'envoi des chaînes de language vers eux,
- un calculateur de voie (TP) pour travailler avec des voies de forêts créés par le calculateur de contrôle et pour envoyer les fins de chaîne de language le long des voies et fusionner les différentes sortes d'écho des messages et pour éliminer les voies inutiles et activer l'annulation des déchets dans le calculateur de données (DP),
- acheminement de message (MR) établissant les connexions externes aux autres modules d'interprétation (IM) ou calculateurs d'accès (AP).

6. Selon la revendication 5, un système de traitement distribué dans lequel chaque calculateur travaille avec une ou plusieurs mémoires de données stockant des informations venant de la base du réseau de connaissances et/ou des données transmises et/ou induites par la chaîne de language.
